# FASCICULE DE BREVET EUROPEEN

(11) **EP 3 428 008 B1**
(45) Date de publication et mention de la délivrance du brevet: **20.05.2020**
(21) Numéro de dépôt: 18181850.1
(22) Date de dépôt: 05.07.2018
(51) Int. Cl.: B60N 2/30, B60N 2/80

(54) **SIÈGE DE VÉHICULE AUTOMOBILE ESCAMOTABLE**
VERSTAUBARER FAHRZEUGSITZ
STOWABLE MOTOR VEHICLE SEAT

(30) Priorité: 13.07.2017 FR 1756715
(43) Date de publication de la demande: 16.01.2019
(73) Titulaire: RENAULT s.a.s., 92100 Boulogne-Billancourt (FR)
(72) Inventeur: ROUXEL, Yves, 78320 La Verrière (FR); DAVID, Cyrielle, 92130 Issy-les-Moulineaux (FR); DOS SANTOS, Sébastien, 78250 Meulan-en-Yvelines (FR)

(56) Documents cités:
- EP-A1- 1 547 856
- FR-A1- 2 817 811

## Description

### DOMAINE TECHNIQUE AUQUEL SE RAPPORTE L'INVENTION

La présente invention concerne de manière générale l'agencement d'un habitacle de véhicule.

Elle concerne plus particulièrement un siège de véhicule comportant :
- une structure porteuse,
- une assise montée mobile sur ladite structure porteuse, entre une position d'utilisation et une position déportée,
- un dossier monté mobile sur ladite structure porteuse, entre une position d'utilisation et une position rabattue, et
- un appui-tête assujetti au dossier,

L'invention concerne également un véhicule équipé d'un tel siège.

L'invention trouve une application particulièrement avantageuse dans la réalisation d'un siège passager, c'est-à-dire d'un siège prévu pour être situé à côté du siège conducteur du véhicule.

### ARRIERE-PLAN TECHNOLOGIQUE

Les véhicules automobiles comprennent généralement deux sièges avant situés côte-à-côte. L'un des sièges, appelé siège conducteur, est situé en regard du volant tandis que l'autre, appelé siège passager, permet d'accueillir un éventuel passager.

Il est connu d'équiper ce siège passager d'un dossier rabattable vers l'avant. Ainsi, lorsqu'il n'y a pas de passager dans le véhicule, le conducteur peut basculer ce dossier afin de libérer un espace de chargement communiquant avec l'arrière du véhicule. Cet espace de chargement supplémentaire s'avère particulièrement intéressant lorsque le conducteur souhaite embarquer dans le véhicule des objets de longueurs importantes. Le document EP1547856 donne un tel example de siège.

On connait aussi du document EP1401677 un siège repliable, dont l'assise peut basculer vers l'avant, dont l'appui-tête peut basculer vers l'avant contre le dossier, et dont le dossier peut ensuite basculer vers l'avant, en lieu et place de l'assise.

Un intérêt de ce siège est qu'une fois tous ses composants basculés, la face arrière du dossier crée, avec le reste du plancher du véhicule, une surface plane facilitant la charge d'objets de grandes longueurs.

La bascule de l'appui-tête vers l'avant permet notamment d'éviter que cet appui-tête ne vienne en appui contre l'assise, ce qui empêcherait le dossier de basculer complètement.

Un inconvénient de cette solution technique est qu'elle nécessite de prévoir un appui-tête qui puisse basculer par rapport au dossier vers l'avant, à 180 degrés, ce qui rend la solution onéreuse.

### OBJET DE L'INVENTION

Afin de remédier à l'inconvénient précité de l'état de la technique, on propose selon l'invention un siège tel que défini dans l'introduction, dans lequel l'assise comporte une partie structurelle et un médaillon qui est escamotable par rapport à la partie structurelle de façon à libérer une cavité dans laquelle une partie au moins dudit appui-tête se loge lorsque l'assise est en position déportée et que le dossier est en position rabattue.

Ainsi, grâce à l'invention, l'escamotage du médaillon permet de libérer dans l'assise une place pour l'appui-tête, si bien qu'il n'est nul besoin de concevoir un appui-tête pouvant basculer contre le dossier pour éviter que l'appui-tête empêche le basculement complet du dossier.

La solution employée permet donc de basculer complètement le dossier afin de créer un plancher plat dans le véhicule.

D'autres caractéristiques avantageuses et non limitatives du siège conforme à l'invention sont les suivantes :
- l'assise comporte une garniture qui recouvre une portion au moins de la partie structurelle, et le médaillon est monté mobile sur la partie structurelle ou sur la garniture ;
- le médaillon est articulé sur la partie structurelle ou sur la garniture ;
- l'assise comporte une garniture qui recouvre une portion au moins de la partie structurelle, et la garniture comprend un coussin avant qui borde un côté de la cavité ;
- le médaillon est articulé sur la garniture par une ligne de jonction reliant le médaillon au coussin avant de la garniture ;
- il est prévu une poignée de manœuvre pour faciliter l'escamotage du médaillon ;
- la poignée de manœuvre est une sangle cousue sur le médaillon, à l'opposé de ladite ligne de jonction ;
- l'assise comporte une garniture qui recouvre une portion au moins de la partie structurelle, et la garniture comprend deux coussins latéraux qui bordent la cavité sur deux côtés opposés ;
- l'assise comporte deux bielles chacune articulée à une extrémité sur la partie structurelle de l'assise et à l'autre extrémité sur la structure porteuse.

L'invention propose également un véhicule équipé d'un tel siège.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique des composants d'un siège repliable conforme à l'invention et des liens de mobilité entre ces composants ;
- la figure 2 est une vue schématique du siège de la figure 1, en place dans l'habitacle d'un véhicule automobile ;
- la figure 3 est une vue schématique d'une partie inférieure du siège de la figure 1, représenté avec son assise en position déportée ; et
- la figure 4 est une vue schématique du siège de la figure 1, représenté avec son assise en position déportée et son dossier en position rabattue.

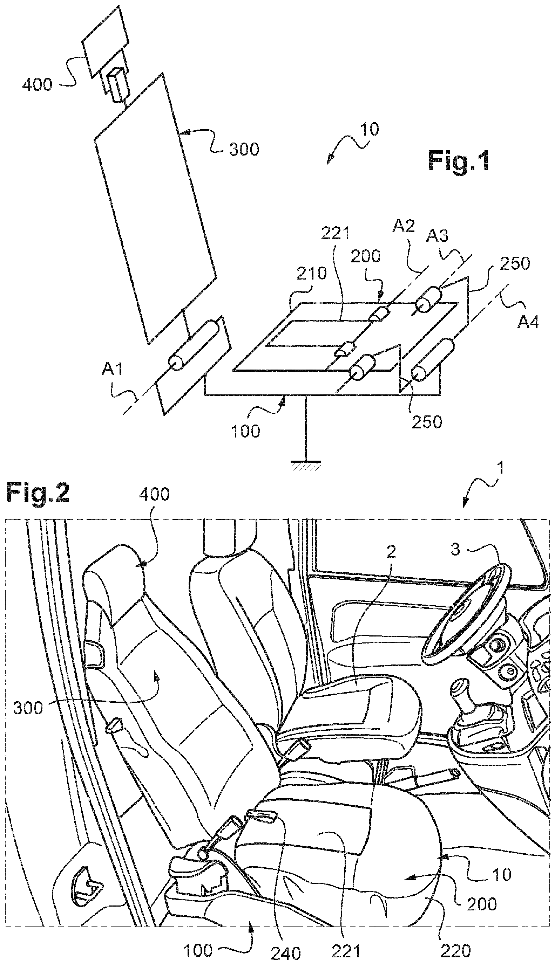

Sur la figure 1, on a représenté de manière très schématique un siège 10 prévu pour être monté dans un habitacle d'un véhicule, ici un véhicule automobile.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes «inférieur » et «supérieur » seront utilisés par rapport à ce véhicule automobile, la partie inférieure d'un élément désignant la partie de cet élément qui est située du côté du plancher du véhicule et la partie supérieure désignant la partie de cet élément qui est située du côté du toit.

Par ailleurs, dans la suite de la description, on dira de deux éléments qu'ils sont « articulés » lorsqu'ils seront connectés ensemble au moyen d'une simple liaison pivot, avec donc un seul et unique degré de liberté.

Tel qu'il apparaît sur la figure 2, ce véhicule automobile 1 est un véhicule « utilitaire », c'est-à-dire un véhicule comportant une unique rangée de sièges. Il ne comporte en revanche pas de siège ou de banquette arrière, puisque l'ensemble de la zone arrière du véhicule constitue un coffre de chargement. En variante, il pourrait s'agir de tout autre type de véhicule automobile.

Ce véhicule automobile 1 comporte ici exactement deux sièges, dont un siège conducteur 2 situé en face du volant 3 du véhicule, et un siège passager 10 situé à côté du siège conducteur 2. Tel qu'il est représenté sur la figure 2, le siège passager 10 est situé à droite du siège conducteur 2.

La présente invention porte alors plus précisément sur ce siège passager 10.

Comme le montre schématiquement la figure 1, ce siège passager 10 comporte une assise 200 et un dossier 300 montés sur une même structure porteuse 100.

L'assise 200 et le dossier 300 comportent chacun une partie structurelle (ci-après appelée « armature ») recouverte, pour le confort du passager, d'une garniture.

Sur les figures 1 et 2, l'assise 200 et le dossier 300 sont représentés en position d'utilisation, c'est-à-dire en position pour accueillir un passager.

Dans cette position d'utilisation, l'assise 200 s'étend sensiblement horizontalement (à 20 degrés près) et le dossier 300 est légèrement incliné vers l'arrière (avec un angle compris entre 5 et 45 degrés par rapport à la verticale).

Ce siège passager 10 est repliable, c'est-à-dire qu'il peut basculer de manière à libérer de l'espace de chargement dans le véhicule.

Les composants du siège passager 10 présentent à cet effet de nombreuses mobilités. Pour bien comprendre l'invention, on peut alors tout d'abord décrire brièvement ces mobilités, en référence à la figure 1.

Ici, la structure porteuse 100 est représentée comme étant fixée au plancher du véhicule.

Bien entendu, en variante, elle pourra être montée mobile sur le plancher du véhicule. Elle pourrait par exemple être montée sur le plancher du véhicule avec une mobilité de translation selon un axe parallèle ou orthogonal à l'axe longitudinal du véhicule.

Le dossier 300 est articulé sur la structure porteuse 100 autour d'un axe inférieur A1. Cet axe inférieur A1 est globalement situé sous le bord inférieur du dossier 300. Il s'étend en pratique horizontalement et orthogonalement à l'axe longitudinal du véhicule automobile 1.

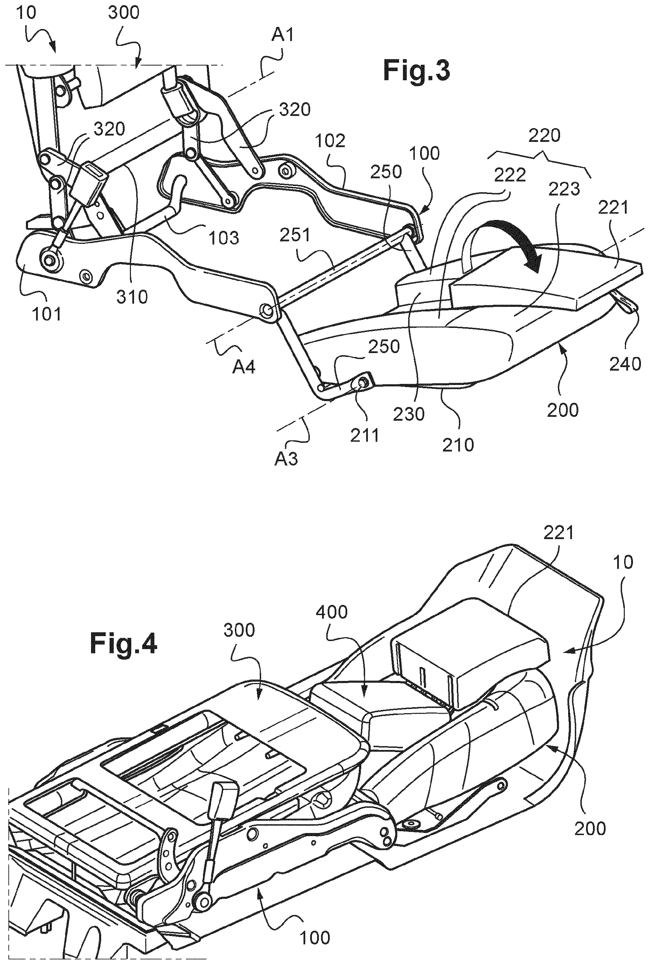

Ainsi, le dossier 300 peut basculer depuis sa position d'utilisation (voir figure 2) jusqu'à une position rabattue vers l'avant (voir figure 4).

Ici, le dossier 300 est équipé sur son bord supérieur d'un appui-tête 400. Ce dernier pourrait être fixé de façon indémontable sur le dossier. Toutefois, ici, on considérera qu'il est monté de façon à pouvoir coulisser par rapport au dossier, de manière à ce que sa hauteur puisse être ajustée à la taille du passager.

L'assise 200 est pour sa part montée mobile sur la structure porteuse 100 au moyen de bielles 250.

Ces bielles 250 sont chacune articulées, d'un côté, sur l'armature 210 de l'assise 200 et, de l'autre, sur la structure porteuse 100.

Chaque bielle 250 présente ainsi :
- une première mobilité de pivotement par rapport à l'armature 210 de l'assise 200, autour d'un premier axe de pivot A3, et
- une seconde mobilité de pivotement par rapport à la structure porteuse 100, autour d'un second axe de pivot A4.

Ce second axe de pivot A4 est globalement situé sous le bord avant de l'assise 200 (en position d'utilisation). Il s'étend horizontalement et orthogonalement à l'axe longitudinal du véhicule automobile.

Le premier axe de pivot A3 s'étend quant à lui parallèlement au second axe de pivot A4.

Ainsi, l'assise 200 peut être déplacée depuis sa position d'utilisation (voir figure 2) jusqu'à une position déportée vers l'avant (voir figure 3), sous la planche de bord du véhicule, en conservant une orientation sensiblement horizontale. On peut alors dire de l'assise 200 qu'elle est montée sur la structure porteuse 100 avec une mobilité de translation circulaire.

Grâce à la position de l'axe inférieur A1 (en dessous du dossier 300), lorsque le dossier 300 bascule en position rabattue, il se place en lieu et place de l'assise 200.

L'objectif premier est ainsi que sa face arrière s'étende le plus horizontalement possible, par exemple avec un angle de 5 degrés maximum avec l'horizontale.

L'objectif second est que sa face arrière s'étende à hauteur du plancher du coffre (de façon à ne pas faire apparaître de marche entre le coffre et l'habitacle lorsque le dossier 300 est rabattu).

On comprend ici que le dossier 300 ne peut être positionné en position rabattue vers l'avant que si l'assise 200 a préalablement été escamotée vers l'avant.

Le problème est alors qu'étant donnée la hauteur du dossier 300 et de l'appui-tête 400, lorsque le dossier 300 bascule en lieu et place de l'assise 200, l'appui-tête 400 risque de venir buter contre l'assise 100.

Pour éviter ce problème, selon une caractéristique particulièrement avantageuse de l'invention, l'assise 200 comporte un médaillon 221 qui est escamotable par rapport à son armature 210. Une fois escamoté, le médaillon 221 libère une cavité 230 dans l'assise 200 (voir figure 3) dans laquelle une partie au moins de l'appui-tête 400 peut venir se loger lorsque l'assise 200 est en position déportée vers l'avant et que le dossier 300 est en position rabattue (voir figure 4).

Comme le montre la figure 1, le médaillon 221 est plus précisément articulé par rapport au reste de l'assise 200, autour d'un axe A2 parallèle aux axes de pivot A3, A4.

On peut maintenant décrire plus en détail comment, dans le mode de réalisation représenté sur les figures 2 et 3, ces différentes mobilités sont en pratique mises en œuvre.

L'armature 210 de l'assise 200 se présente ici sous la forme d'un cadre tubulaire métallique.

Comme le montre la figure 3, la garniture 220 et le médaillon 221 recouvrent cette armature 210, de façon à offrir au passager une assise confortable. Ils comportent à cet effet chacun une housse (en textile, en cuir...) dans laquelle une mousse (par exemple polyuréthane) est enfermée.

Le médaillon 221 présente ici une forme de coussin rectangulaire. La garniture 220 présente quant à elle une forme de U de façon à border le médaillon 221 sur trois côtés.

Le médaillon 221 est ici situé à égales distances des deux côtés de l'assise 200. Il s'étend par ailleurs à distance du bord avant de l'assise 200, le long du bord arrière de l'assise 200.

La garniture 220 est alors formée de trois parties en U, dont deux coussins latéraux 222 qui bordent le médaillon 221 sur chacun de ses deux côtés, et un coussin avant 223 qui borde le médaillon 221 à l'avant.

Le médaillon 221 est articulé par rapport au reste de l'assise 200 de façon à libérer la cavité 230.

Pour cela, on pourrait prévoir tout type de liaison entre le médaillon 221 et le reste de l'assise 200 (cames, ...).

Par mesure de simplicité et d'efficacité, ici, le médaillon 221 est articulé directement sur la garniture 220, par une ligne de jonction.

Plus précisément ici, le bord avant de la face supérieure de la housse du médaillon 221 est raccordé par un lien textile (par exemple une ligne de couture) à la housse de la garniture 220 (au niveau du bord arrière de la face supérieure du coussin avant 223 de la garniture 220).

De cette façon, il est possible de faire basculer le médaillon à 180 degrés vers le haut et vers l'avant, entre une position d'utilisation représentée sur la figure 2 et une position escamotée représentée sur la figure 3.

La largeur du médaillon 221 est très légèrement supérieure à la largeur de l'appui-tête 400.

La longueur du médaillon 221 est quant à elle prévue au plus juste de façon à ce que :
- la cavité 230 puisse accueillir la partie haute de l'appui-tête 400, et que
- le médaillon 221 en position escamotée ne vienne pas buter contre la planche de bord du véhicule.

Ici, il est prévu une poignée de manœuvre 240 pour faciliter l'extraction du médaillon 221 hors de la cavité 230.

Cette poignée de manœuvre 240 est ici simplement formée par une sangle tissée, cousue sur le bord arrière de la housse du médaillon 221.

Elle est ici cousue de manière à faire saillie au-dessus du médaillon 221, de telle façon qu'elle reste accessible à l'usager lorsque le médaillon 221 est en position d'utilisation.

On peut maintenant décrire en détail la structure porteuse 100 et le dossier 300.

Comme le montre la figure 3, la structure porteuse 100 comporte deux flancs 101, 102 latéraux et symétriques, connectés ensemble à l'arrière par une traverse arrière 103 et à l'avant par une traverse avant 251 de l'assise 200.

On pourra prévoir de souder ces deux flancs 101, 102 sur le plancher du véhicule ou de les fixer à deux rails pour offrir à la structure porteuse 100 un degré de mobilité en translation par rapport au plancher.

La traverse avant 251 est montée mobile en rotation sur les deux flancs 101, 102 de cette structure porteuse 100, autour du second axe de pivot A4.

Les bielles 250, dont on rappelle qu'elles connectent l'armature 210 de l'assise 200 à la structure porteuse 100, sont alors soudées par une première de leurs extrémités sur cette traverse avant 103, ce qui leur offre leur mobilité de rotation autour du second axe de pivot A4.

Les bielles 250 sont par ailleurs articulées par leurs secondes extrémités sur des pions 211 soudés sur l'armature 210 de l'assise 200. En pratique, les pions 211 sont placés environ à mi-longueur de l'assise 200. De cette manière, pendant le basculement des bielles 250 autour du second axe de pivot A4, il est possible de maintenir l'assise 200 sensiblement à l'horizontale tout en s'assurant qu'aucun obstacle ne se trouve sur la trajectoire de l'assise 200.

Comme cela a déjà été mentionné en référence à la figure 1, le dossier 300 est articulé sur la structure porteuse 100 autour de l'axe inférieur A1.

Pour cela, comme le montre bien la figure 3, le siège 10 comporte un ensemble de biellettes 320 réparties par paire de chaque côté du dossier 300.

Chaque biellette 320 est articulée, à une de ses extrémités, sur l'un des flancs 101, 102 de la structure porteuse 100, et, à l'autre de ses extrémités, sur l'ossature 310 du dossier 300. Ces biellettes 320 sont conçues pour permettre au dossier 300 de basculer selon un mouvement de pseudo-rotation autour de l'axe inférieur A1.

Il est par ailleurs prévu des moyens de blocage des mobilités du dossier 300 et de l'assise 200, qui permettent de bloquer le dossier 300 et l'assise 200 en position d'utilisation. Il est aussi prévu des moyens de déverrouillage de ces moyens de blocage, qui permettent de libérer les mobilités du dossier 300 et de l'assise 200. Ces moyens de blocage et de déverrouillage étant bien connus de l'homme du métier, ils ne seront pas ici décrits.

La présente invention n'est nullement limitée au mode de réalisation décrit et représenté, mais l'homme du métier saura y apporter toute variante conforme à l'invention.

Ainsi pourrait-on prévoir que l'assise soit prévue pour basculer par rapport à la structure porteuse selon un simple mouvement de rotation, avec un angle d'environ 180 degrés. Dans cette variante, le médaillon sera extractible non pas de la face supérieure de l'assise, mais de la face inférieure de celle-ci.

## Revendications

1. Siège (10) de véhicule comportant :
- une structure porteuse (100),
- une assise (200) montée mobile sur ladite structure porteuse (100) entre une position d'utilisation et une position déportée,
- un dossier (300) monté mobile sur ladite structure porteuse (100), entre une position d'utilisation et une position rabattue, et
- un appui-tête (400) assujetti au dossier (300),
**caractérisé en ce que** l'assise (200) comporte une partie structurelle (210) et un médaillon (221) qui est escamotable par rapport à la partie structurelle (210) de façon à libérer une cavité (230) dans laquelle une partie au moins dudit appui-tête (400) se loge lorsque l'assise (200) est en position déportée et que le dossier (300) est en position rabattue.

2. Siège (10) selon la revendication précédente, dans lequel l'assise (200) comporte une garniture (220) qui recouvre une portion au moins de la partie structurelle (210), et dans lequel le médaillon (221) est monté mobile sur la partie structurelle (210) ou sur la garniture (220).

3. Siège (10) selon la revendication précédente, dans lequel le médaillon (221) est articulé sur la partie structurelle (210) ou sur la garniture (220).

4. Siège selon l'une des revendications précédentes, dans lequel l'assise (200) comporte une garniture (220) qui recouvre une portion au moins de la partie structurelle (210), et dans lequel la garniture (220) comprend un coussin avant (223) qui borde un côté de la cavité (230).

5. Siège (10) selon les deux revendications précédentes, dans lequel le médaillon (221) est articulé sur la garniture (220) par un ligne de jonction reliant le médaillon (221) au coussin avant (223) de la garniture (220).

6. Siège selon l'une des revendications précédentes, dans lequel il est prévu une poignée de manœuvre (240) pour faciliter l'escamotage du médaillon (221).

7. Siège (10) selon les deux revendications précédentes, dans lequel la poignée de manœuvre (240) est une sangle cousue sur le médaillon (221), à l'opposé de ladite ligne de jonction.

8. Siège selon l'une des revendications précédentes, dans lequel l'assise (200) comporte une garniture (220) qui recouvre une portion au moins de la partie structurelle (210), et dans lequel la garniture (220) comprend deux coussins latéraux (222) qui bordent la cavité (230) sur deux côtés opposés.

9. Siège selon l'une des revendications précédentes, dans lequel l'assise (200) comporte deux bielles (250) chacune articulée à une extrémité sur la partie structurelle (210) de l'assise (200) et à l'autre extrémité sur la structure porteuse (100).

10. Véhicule automobile (1) comprenant un siège conducteur (2), **caractérisé en ce qu'**il comporte en outre un siège passager (10) qui est situé à côté du siège conducteur (2) et qui est conforme à l'une des revendications précédentes.

## Patentansprüche

1. Fahrzeugsitz (10), der aufweist:
- eine Tragstruktur (100),
- eine Sitzfläche (200), die zwischen einer Benutzungsstellung und einer versetzten Stellung beweglich auf die Tragstruktur (100) montiert ist,
- eine Rückenlehne (300), die zwischen einer Benutzungsstellung und einer heruntergeklappten Stellung beweglich auf die Tragstruktur (100) montiert ist, und
- eine an der Rückenlehne (300) befestigte Kopfstütze (400),
**dadurch gekennzeichnet, dass** die Sitzfläche (200) ein Strukturteil (210) und ein Medaillon (221) aufweist, das bezüglich des Strukturteils (210) umklappbar ist, um einen Hohlraum (230) freizugeben, in dem zumindest ein Teil der Kopfstütze (400) untergebracht wird, wenn die Sitzfläche (200) in versetzter Stellung und die Rückenlehne (300) in heruntergeklappter Stellung ist.

2. Sitz (10) nach dem vorhergehenden Anspruch, wobei die Sitzfläche (200) ein Polster (220) aufweist, das zumindest einen Teil des Strukturteils (210) bedeckt, und wobei das Medaillon (221) beweglich auf das Strukturteil (210) oder auf das Polster (220) montiert ist.

3. Sitz (10) nach dem vorhergehenden Anspruch, wobei das Medaillon (221) an das Strukturteil (210) oder an das Polster (220) angelenkt ist.

4. Sitz nach einem der vorhergehenden Ansprüche, wobei die Sitzfläche (200) ein Polster (220) aufweist, das mindestens einen Teil des Strukturteils (210) bedeckt, und wobei das Polster (220) ein vorderes Kissen (223) enthält, das eine Seite des Hohlraums (230) umrandet.

5. Sitz (10) nach den zwei vorhergehenden Ansprüchen, wobei das Medaillon (221) durch eine Verbindungslinie, die das Medaillon (221) mit dem vorderen Kissen (223) des Polsters (220) verbindet, an das Polster (220) angelenkt ist.

6. Sitz nach einem der vorhergehenden Ansprüche, wobei ein Betätigungsgriff (240) vorgesehen ist, um das Umklappen des Medaillons (221) zu erleichtern.

7. Sitz (10) nach den zwei vorhergehenden Ansprüchen, wobei der Betätigungsgriff (240) ein auf das Medaillon (221) entgegengesetzt zur Verbindungslinie genähter Gurt ist.

8. Sitz nach einem der vorhergehenden Ansprüche, wobei die Sitzfläche (200) ein Polster (220) aufweist, das mindestens einen Teil des Strukturteils (210) bedeckt, und wobei das Polster (220) zwei seitliche Kissen (222) enthält, die auf zwei gegenüberliegenden Seiten den Hohlraum (230) umranden.

9. Sitz nach einem der vorhergehenden Ansprüche, wobei die Sitzfläche (200) zwei Schubstangen (250) aufweist, die je an einem Ende an das Strukturteil (210) der Sitzfläche (200) und am anderen Ende an die Tragstruktur (100) angelenkt sind.

10. Kraftfahrzeug (1), das einen Fahrersitz (2) aufweist, **dadurch gekennzeichnet, dass** es außerdem einen Beifahrersitz (10) aufweist, der sich neben dem Fahrersitz (2) befindet und der einem der vorhergehenden Ansprüche entspricht.

## Claims

1. Vehicle seat (10) comprising:
- a load-bearing structure (100),
- a sitting portion (200) mounted so as to be able to move on said load-bearing structure (100) between a use position and an offset position,
- a backrest (300) mounted so as to be able to move on said load-bearing structure (100) between a use position and a folded-down position, and
- a headrest (400) joined to the backrest (300), **characterized in that** the sitting portion (200) comprises a structural part (210) and a medallion (221) that can be stowed with respect to the structural part (210) so as to open up a cavity (230) in which at least part of said headrest (400) is housed when the sitting portion (200) is in the offset position and the backrest (300) is in the folded-down position.

2. Seat (10) according to the preceding claim, in which the sitting portion (200) comprises trim (220) which covers at least a portion of the structural part (210) and in which the medallion (221) is mounted so as to be able to move on the structural part (210) or on the trim (220).

3. Seat (10) according to the preceding claim, in which the medallion (221) is articulated on the structural part (210) or on the trim (220).

4. Seat according to one of the preceding claims, in which the sitting portion (200) comprises a trim (220) which covers at least a portion of the structural part (210) and in which the trim (220) comprises a front cushion (223) which bounds one side of the cavity (230).

5. Seat (10) according to the two preceding claims, in which the medallion (221) is articulated on the trim (220) by a junction line connecting the medallion (221) to the front cushion (223) of the trim (220).

6. Seat according to one of the preceding claims, in which there is provided a handling grip (240) for facilitating stowing of the medallion (221).

7. Seat (10) according to the two preceding claims, in which the handling grip (240) is a strap sewn onto the medallion (221), opposite said junction line.

8. Seat according to one of the preceding claims, in which the sitting portion (200) comprises a trim (220) which covers at least a portion of the structural part (210), and in which the trim (220) comprises two side cushions (222) which bound the cavity (230) on two opposite sides.

9. Seat according to one of the preceding claims, in which the sitting portion (200) comprises two connecting rods (250), each one articulated at one end to the structural part (210) of the sitting portion (200) and at the other end to the load-bearing structure (100).

10. Motor vehicle (1) comprising a driver's seat (2), **characterized in that** it further comprises a passenger seat (10) which is located beside the driver's seat (2) and which is in accordance with one of the preceding claims.
